# EUROPÄISCHE PATENTANMELDUNG

(11) **EP 3 546 812 A1**
(43) Veröffentlichungstag der Anmeldung: **02.10.2019**
(21) Anmeldenummer: 19163930.1
(22) Anmeldetag: 20.03.2019
(51) Int. Cl.: F16L 19/10, B33Y 80/00

(54) **HYDRAULIKKOMPONENTENSYSTEM MIT EINER ZUMINDEST TEILWEISE GENERATIV HERGESTELLTEN HYDRAULIKKOMPONENTE**

(30) Priorität: 27.03.2018 DE 102018107299
(71) Anmelder: Airbus Operations GmbH, 21129 Hamburg (DE)
(72) Erfinder: Weber, Julian, 21129 Hamburg (DE); Scheffer, Sten, 21129 Hamburg (DE)
(74) Vertreter: LKGLOBAL Lorenz & Kopf PartG mbB Patentanwälte

(57) **Zusammenfassung**

Ein Hydraulikkomponentensystem weist eine Hydraulikleitung (10), eine zumindest teilweise generativ hergestellte Hydraulikkomponente (4), ein ringförmiges Dichtmittel (22) und ein hohles Befestigungselement (34) auf. Das Dichtmittel (22) weist einen ersten Endbereich (24) und einen gegenüberliegenden zweiten Endbereich (28) mit einer ersten axialen Kontaktfläche (30) auf. Das Befestigungselement (34) weist einen Eingriffsbereich (36) mit einer innenseitig angeordneten Umfangsfläche mit zweiten Eingriffsmitteln (46) und einen gegenüberliegenden Klemmbereich (38) mit einer zum Eingriffsbereich (36) weisenden zweiten axialen Kontaktfläche (40) auf und ist dazu ausgebildet, die Hydraulikleitung (10) und das darauf befindliche Dichtmittel (22) zu umschließen und einen Flächenkontakt zwischen der ersten und der zweiten axialen Kontaktfläche hervorzurufen. Der Aufnahmeabschnitt (8), das Dichtmittel (22) und das Befestigungselement (34) sind derart zueinander korrespondierend ausgestaltet, dass durch ein Eingreifen der ersten und zweiten Eingriffsmittel (44, 46) ineinander der erste Endbereich (24) des Dichtmittels (22) in den konisch zulaufenden Bereich der Öffnung (12) des Aufnahmeabschnitts (8) und die Hydraulikleitung (10) gepresst wird und dadurch eine Abdichtung zwischen dem Aufnahmeabschnitt (8), dem Dichtmittel (22) und der Hydraulikleitung (10) zueinander erfolgt.

## Beschreibung

### TECHNISCHES GEBIET

Die Erfindung betrifft ein Hydraulikkomponentensystem. Die Erfindung betrifft ferner ein Fahrzeug und insbesondere ein Flugzeug, in dem ein derartiges Hydraulikkomponentensystem angeordnet ist.

### HINTERGRUND DER ERFINDUNG

Die Verwendung hydraulischer Vorrichtungen für unterschiedlichste Aufgaben ist für viele stationäre und mobile Arbeitsmaschinen und Fahrzeuge bekannt. Diese setzen üblicherweise ein Netzwerk aus Hydraulikleitungen sowie Kupplungen und geeignete Ventile voraus. Für komplexere Vorrichtungen werden oftmals Ventil- bzw. Steuerblöcke verwendet, mit denen Ventilfunktionen in einer kompakten Einheit konzentriert werden. Es ist bekannt, zur Verringerung des Gewichts einen derartigen Steuerblock in metallischer Leichtbauweise zu realisieren.

Ein Verfahren zur Herstellung eines Steuerblocks in metallischer Leichtbauweise ist etwa aus DE 10 2006 062 373 A1 bekannt, bei dem ein System von Schaltungselementen mit belastungsgerechten Wandungen ausgeführt ist, die direkt oder mit weiteren Elementen zu einer zusammenhängenden Struktur verbunden und sämtlich durch ein generatives Fertigungsverfahren erzeugt sind.

Zum Anbinden von Hydraulikleitungen an einen Steuerblock, der mit Hilfe eines generativen Fertigungsverfahrens hergestellt ist, werden üblicherweise herkömmliche, genormte und weitverbreitete Kupplungseinrichtungen in Betracht gezogen. Hierzu kann der Steuerblock entsprechende Öffnungen aufweisen, in die ein Einschraubzapfen eingeschraubt wird, mit dem dann weitere Komponenten verbindbar sind. Eine mit einem Einschraubzapfen zu versehene Öffnung weist eine Bohrung mit Innengewinde und Dichtflächen auf. Bedingt durch die Geometrie des Einschraubzapfens ist ein maximaler Durchmesser für eine die Öffnung umgebende ringförmige Dichtfläche ungefähr um einen Faktor 3 größer als ein innerer Durchmesser der Öffnung. Für diese Verbindungsart ist somit eine hohe Materialanhäufung relativ zu dem bereitgestellten Strömungskanal notwendig. Das Volumen des Festmaterials, also das metallische Material des Einschraubzapfens und der Hydraulikkomponente, beträgt etwa das 8-fache Volumen des darin bereitgestellten Ölvolumens im Verbindungsbereich.

Zusätzlich weist ein Durchgangsloch in dem Einschraubzapfen bauartbedingt einen geringeren Durchmesser auf als die Öffnungen. Folglich ist für diese Verbindungsart eine relativ hohe Materialanhäufung für den inneren Durchmesser relativ zum Strömungskanal notwendig. Insbesondere bei generativ hergestellten Steuerblöcken führt dies zu einem recht hohen Aufwand, einem größeren Materialeinsatz, höheren Kosten und nicht zuletzt zu einem höheren Gewicht, welches insbesondere bei der Verwendung eines solchen Steuerblocks in einem Flugzeug minimiert werden sollte.

### ZUSAMMENFASSUNG DER ERFINDUNG

Eine Aufgabe der Erfindung liegt demnach darin, eine Hydraulikkomponente oder ein Hydraulikkomponentensystem mit einer solchen Hydraulikkomponente vorzuschlagen, bei der eine ökonomische Herstellung durch ein generatives Herstellverfahren begünstigt wird und gleichzeitig das Gewicht und die Materialanhäufung reduziert werden können.

Die Aufgabe wird gelöst durch ein Hydraulikkomponentensystem mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Hydraulikkomponentensystem vorgeschlagen, das mindestens eine Hydraulikleitung, eine Hydraulikkomponente, die zumindest teilweise mithilfe eines generativen Herstellverfahrens hergestellt ist und ein Leitungsende mit einem integralen, ringförmigen Aufnahmeabschnitt mit einer erste Eingriffsmittel aufweisenden äußeren Umfangsfläche und einer zumindest bereichsweise konisch zulaufenden Öffnung zum Einführen der Hydraulikleitung aufweist, ein an der Hydraulikleitung positionierbares ringförmiges Dichtmittel und ein an der Hydraulikleitung positionierbares und mit dem Aufnahmeabschnitt verbindbares hohles Befestigungselement aufweist. Das Dichtmittel weist einen ersten Endbereich und einen gegenüberliegenden zweiten Endbereich mit einer ersten axialen Kontaktfläche auf. Das Befestigungselement weist einen Eingriffsbereich mit einer innenseitigen Umfangsfläche mit zweiten Eingriffsmitteln und einen gegenüberliegenden Klemmbereich mit einer zum Eingriffsbereich weisenden zweiten axialen Kontaktfläche auf und ist dazu ausgebildet, die Hydraulikleitung und das darauf befindliche Dichtmittel zu umschließen und einen Flächenkontakt zwischen der ersten und der zweiten axialen Kontaktfläche hervorzurufen. Der Aufnahmeabschnitt, das Dichtmittel und das Befestigungselement sind derart zueinander korrespondierend ausgestaltet, dass durch ein Eingreifen der ersten und zweiten Eingriffsmittel ineinander der erste Endbereich des Dichtmittels in den konisch zulaufenden Bereich der Öffnung des Aufnahmeabschnitts und die Hydraulikleitung gepresst wird und dadurch eine Abdichtung zwischen dem Aufnahmeabschnitt, dem Dichtmittel und der Hydraulikleitung zueinander erfolgt.

Die Hydraulikleitung ist insbesondere eine Rohrleitung, die eine ausreichende Formstabilität aufweist. Die Hydraulikleitung soll zum einen zur Bewältigung des auftretenden hydraulischen Drucks gestaltet sein und zum anderen das Eingehen einer Dichtung durch die nachfolgend erläuterten Komponenten geeignet sein. Es bietet sich an, die Hydraulikleitung aus einem metallischen Material herzustellen.

Die Hydraulikkomponente kann der vorangehend genannte Steuerblock sein. Allerdings ist vorstellbar, auch gänzlich andere Hydraulikkomponenten erfindungsgemäß auszugestalten, ohne von dem Kerngedanken der Erfindung abzuweichen. Es könnte etwa wünschenswert sein, eine Hydraulikpumpe mit einem Gehäuseteil auszustatten, welches mithilfe eines generativen Fertigungsverfahrens hergestellt ist. Das Gehäuseteil könnte dann ein Leitungsende aufweisen, das den ringförmigen Aufnahmeabschnitt besitzt.

Das genannte generative Fertigungsverfahren, welches auch als additive Fertigung bezeichnet wird, kann auf verschiedenen Prozessen basieren. Zum Beispiel kann das herzustellende Kupplungsgehäuse durch ein selektives Laserschmelzverfahren ("selective laser melting", SLM), ein selektives Lasersinterverfahren ("selective laser sintering",SLS), ein Elektronenstrahlschmelzverfahren oder durch ein Binder Jetting Verfahren gefertigt sein. Alternativ können Pulver-, insbesondere Metallpulver-, Auftragsverfahren und/oder Liquid Composite Molding-Verfahren eingesetzt werden, wobei auch weitere generative Verfahren möglich wären. Die generative Fertigung umfasst üblicherweise den schichtweisen Aufbau eines Bauteils auf Basis eines Datenmodells durch selektives Verfestigen oder Auftragen eines formlosen Materials, etwa eines Pulvers oder einer Flüssigkeit, und/oder eines formneutralen Materials, wie beispielsweise eines band- und/oder drahtförmigen Materials, mittels chemischer und/oder physikalischer Prozesse. Diese Art der Fertigung ermöglicht nicht nur ein besonders geringes Gewicht durch optimale Anpassung an zu erwartende Belastungszustände des Bauteils und gezieltes Weglassen von Material an bestimmten Stellen, sondern ermöglicht auch eine mit anderen Verfahren nicht erreichbare Gestaltungsfreiheit von Hohlräumen, Strömungskanälen und dergleichen im Innern der Hydraulikkomponente.

Je nach Art des gewählten Verfahrens kann es hilfreich sein, nach der Herstellung des betreffenden Bauteils der Hydraulikkomponente eine Endbearbeitung vorzunehmen, welche sich insbesondere auf die Bearbeitung der Oberfläche, insbesondere der inneren Oberfläche, beziehen kann. Neben der Bearbeitung mit einer Beizlösung ist auch das Durchströmen des Bauteils durch Partikel enthaltene Flüssigkeiten vorstellbar. Ziel ist, etwaige, durch das generative Verfahren verbliebene Treppenstufen an inneren, der Strömung ausgesetzten Oberflächen zu reduzieren oder vollständig zu entfernen.

Die Hydraulikkomponente ist bevorzugt aus einem metallischen Material hergestellt. Hydraulische Systeme sind durch hohe Systemdrücke, die oftmals 100 bar, 200 bar oder mehr überschreiten, zur Erreichung einer besonders hohen Leistungsdichte gekennzeichnet. Die Verwendung eines metallischen Materials erlaubt, einem solchen Systemdruck standhalten zu können. Die Verwendung von Titan, einer Titanlegierung, Aluminium, einer Aluminiumlegierung und/oder einer Edelstahllegierung kann hierfür vorteilhaft sein, weitere Metalle oder Metalllegierungen sind nicht ausgeschlossen.

Das vorangehend genannte Leitungsende kann als ein Ende eines Leitungsstücks angesehen werden, das einen integralen Bestandteil der Hydraulikkomponente bildet. Das Leitungsende ist insbesondere ein Ende eines rohrförmigen Abschnitts, der aus der Hydraulikkomponente ragt und eine Verbindung mit der Hydraulikleitung erlaubt. Der ringförmige Aufnahmeabschnitt weist bevorzugt einen geschlossenen Umfang auf, um eine ausreichende Dichtwirkung herstellen zu können.

Die ersten Eingriffsmittel sind insbesondere Flächenmerkmale, die an der äußeren Umfangsfläche angeordnet sind und ein Eingreifen mit den zweiten Eingriffsmitteln erlauben. Insbesondere können die ersten Eingriffsmittel als Rillen ausgeführt sein, die in einem vorbestimmten Abstand zueinander an der Umfangsfläche umlaufend angeordnet sind. Die Rillen können dabei jeweils nach Art eines Gewindes ausgeführt sein. Die Rillen können insbesondere eine Gewindesteigung aufweisen.

Das hohle Befestigungselement weist indes zweite Eingriffsmittel auf, die mit den ersten Eingriffsmitteln in Eingriff bringbar sind. Hierzu sind die zweiten Eingriffsmittel korrespondierend zu den ersten Eingriffsmitteln ausgestaltet und an der innenseitig angeordneten Umfangsfläche positioniert. Diese umgibt die äußere Umfangsfläche des Leitungsendes und folglich ebenso das Dichtmittel und einen Abschnitt der Hydraulikleitung, der in der Öffnung positioniert ist und durch das Dichtmittel ragt. Gemäß dem vorangehenden Beispiel könnten die zweiten Eingriffsmittel ebenfalls Rillen mit einer angepassten Geometrie sein.

Das Leitungsende besitzt eine Öffnung, in die die Hydraulikleitung einsteckbar ist. Die Öffnung läuft konisch bereichsweise zu, so dass sich der Querschnitt der Öffnung von einem ersten Querschnitt in das Leitungsstück der Hydraulickomponente hinein zumindest über einen gewissen Bereich zu einem zweiten Querschnitt verjüngt. Hierdurch kann das Leitungsende mit dem Dichtmittel insbesondere nach Art einer Schneidringdichtung oder allgemein durch Erreichung von Klemm- oder Quetschkräften zur Abdichtung zusammenwirken.

Das Dichtmittel ist bevorzugt aus einem metallischen Material hergestellt, welches dazu geeignet ist, das Material der Hydraulikleitung zumindest zu einem gewissen Grad zu verformen. Durch das Einpressen des Dichtmittels an der in die Öffnung eingeschobenen Hydraulikleitung in die konisch zulaufende Öffnung erfolgt ein Materialaufwurf an der Hydraulikleitung direkt vor der Endkante des Dichtmittels, der zu der Bildung eines Bunds führt. Hierdurch wird eine hochdruckfeste Dichtung zwischen der Hydraulikleitung und der Öffnung hervorgerufen.

Das Befestigungselement ist dazu ausgebildet, das Dichtmittel über die Hydraulikleitung in die konisch zulaufende Öffnung des Leitungsendes einzupressen. Es muss daher nicht zwangsläufig einen geschlossenen Umfang aufweisen, sondern könnte auch krallenartige Glieder besitzen, die voneinander beabstandet über eine Umfangsrichtung verteilt sind. Insgesamt sind die Eingriffsmittel derart auszugestalten, dass eine ausreichende Presskraft durch das Befestigungselement auf das Dichtmittel zu der konischen Öffnung hin ausgeübt werden kann und die Verbindung zwischen dem Befestigungselement und dem Aufnahmeabschnitt dauerhaft ist. Es kann vorgesehen sein, zusätzlich zur Sicherung der Verbindung eine Art Sicherungselement vorzusehen.

Die erfindungsgemäße Ausgestaltung hat eine Reihe von Vorteilen. Es ist etwa eine deutlich geringere Materialanhäufung an der Hydraulikkomponente notwendig, um eine hochdruckfeste Verbindung zwischen einer Hydraulikleitung und der Hydraulikkomponente vorzusehen. Durch den integralen Aufnahmeabschnitt ist das Einschrauben eines separaten Einschraubzapfens nicht erforderlich, so dass auch dessen Sitz mit einer entsprechend großen, umlaufenden Dichtfläche nicht notwendig ist. Außerdem kann hierdurch verhindert werden, die Größe eines Durchströmquerschnitts zu ändern.

Der Innendurchmesser der Hydraulikleitung kann ohne weitere lokale Verengung durch den Aufnahmeabschnitt in das Leitungsende der Hydraulikkomponente fortgeführt werden. Die Strömungsverhältnisse für die Hydraulikflüssigkeit sind dadurch praktisch ideal und der Strömungswiderstand wird durch den Übergang zwischen der Hydraulikleitung und dem Leitungsende nahezu nicht beeinflusst. Dies bedeutet eine zusätzliche Effizienzsteigerung für die betreffende H ydraulikkomponente.

Desweiteren beträgt das Verhältnis von Materialvolumen des Leitungsendes im Bereich des Aufnahmeabschnitts zu dem darin vorhandenen Volumen für die Hydraulikflüssigkeit weniger als 2,5, wodurch eine deutlich ökonomischere Fertigung im Vergleich zum Stand der Technik möglich ist.

Aufgrund der Integration eines durch die konisch zulaufende Öffnung bereitgestellten Dichtkonus in der additiv aufgebauten Struktur ist lediglich eine einzige Dichtstelle vorhanden und folglich kann damit das Risiko einer möglichen Leckage gemindert werden.

Besonders bevorzugt ist der erste Endbereich des Dichtmittels hülsenförmig. Die hülsenförmige Gestalt erlaubt einen flachen Aufbau und ein weites Einschieben des ersten Endbereichs in die konische Öffnung. Die Ausbildung eines gewünschten flachen Konuswinkels ist dadurch ohne weiteres durchführbar.

Desweiteren ist das Dichtmittel bevorzugt ein Schneidring. Ein solcher kann insbesondere eine 24°-Steigung einer Fläche des ersten Endbereichs aufweisen, um die Schneid- bzw. Klemmwirkung zum Aufwerfen des Materials der Hydraulikleitung zu erreichen.

In einer bevorzugten Ausführungsform entspricht ein innerhalb des Aufnahmeabschnitts gebildeter erster Strömungsquerschnitt einem innerhalb der Hydraulikleitung gebildeten zweiten Strömungsquerschnitt. Eine Hydraulikflüssigkeit kann ohne jegliche Änderung des Strömungsquerschnitts von der Hydraulikleitung in die Hydraulikkomponente fließen. Die Strömung wird dadurch nicht beeinflusst und kann ohne Erzeugung eines zusätzlichen Widerstands in die Hydraulikkomponente fließen. Es findet hierdurch keine Effizienzminderung statt.

Desweiteren kann der Aufnahmeabschnitt einen von der Öffnung abgewandten Übergangsbereich aufweisen, in dem ein Außendurchmesser des Leitungsendes entlang des Leitungsendes in einer von der Öffnung abgewandten Richtung kontinuierlich von einem maximalen Außendurchmesser zu einem konstanten Leitungsaußendurchmesser sinkt, wobei an einer zu der Öffnung gewandten Seite des Übergangsbereichs eine ringförmige erste Anschlagfläche gebildet ist, mit der eine korrespondierend geformte ringförmige zweite Anschlagfläche des Befestigungselements in Flächenkontakt bringbar ist. Durch einen Übergangsbereich kann eine belastungsgerechte Gestaltung des Aufnahmeabschnitts erlangt werden. Die dort vorhandene Materialanhäufung führt zu einer ausreichenden Festigkeit des Aufnahmeabschnitts zur Aufnahme der durch das Befestigungselement eingeprägten Kraft, die sowohl in radialer, als auch in axialer Richtung wirkt. Der kontinuierliche Verlauf des Außendurchmessers kann insbesondere stetig, bevorzugt monoton und besonders bevorzugt streng monoton erfolgen. Als Folge werden für den Übergangsbereich Kerbkräfte weitgehend vermieden, da eine besonders harmonische Formgebung erfolgt. Die erste Anschlagfläche erlaubt dem Benutzer weiterhin eine Rückmeldung darüber, wann das Befestigungselement vollständig montiert ist, d.h. wann die Dichtung zwischen der Hydraulikleitung und dem Aufnahmeabschnitt vollständig ist.

Die ringförmige erste Anschlagfläche kann konisch ausgebildet sein, wobei sich ein Außendurchmesser von der äußeren Umfangsfläche zu dem Übergangsbereich hin aufweitet. Durch die konische Form wird die bereitgestellte Kontaktfläche vergrößert, ohne dass der Außendurchmesser zwangsläufig vergrößert werden muss. Zudem wird eine Zentrierwirkung erreicht, durch die eine möglichst genau axial wirkende Kraft zwischen der ersten Anschlagfläche und dem Befestigungselement generiert wird.

Die Öffnung kann einen konisch zulaufenden Einführbereich und einen sich daran anschließenden hohlzylindrischen Bereich aufweisen, der eine ringförmige Begrenzungsfläche aufweist, die mit einer ringförmigen Stirnfläche der Hydraulikleitung korrespondiert. Der Einführbereich erleichtert durch seine trichterförmige Gestaltung das Einführen der Hydraulikleitung. Die Einstecktiefe der Hydraulikleitung kann durch die ringförmige Begrenzungsfläche begrenzt werden. Nach dem Einstecken der Hydraulikleitung in die Öffnung gerät die Hydraulikleitung in den hohlzylindrischen Bereich und ist folglich in der Öffnung zentriert. Der Innendurchmesser des hohlzylindrischen Bereichs sollte an den Außendurchmesser der Hydraulikleitung derart angepasst sein, dass die Hydraulikleitung manuell in den hohlzylindrischen Bereich einschiebbar ist. Der Innendurchmesser indes ist an den Innendurchmesser der Hydraulikleitung angepasst, so dass die Hydraulikflüssigkeit übergangslos zwischen der Hydraulikleitung und dem Leitungsende strömen kann.

Besonders bevorzugt ist der Durchmesser der äußeren Umfangsfläche des Aufnahmeabschnitts derart gewählt, dass das durch die äußere Umfangsfläche gebildete Volumen höchstens das 2,5fache des von der äußeren Umfangsfläche umschlossenen Hohlraums ist. Die gesamte Konstruktion des Aufnahmeabschnitts ist demnach sehr flach und annähernd hülsenförmig. Durch die integrale Bauweise kann der notwendige Bauraum in radialer Richtung deutlich verringert werden, da die Dichtung keine radial außenliegende ringförmige Dichtfläche erfordert. Insbesondere bei der Verwendung eines Gewindes als erstes und zweites Eingriffsmittel kann der Außendurchmesser deutlich begrenzt werden, da die notwendige Kraft über einen relativ großen Flächenbereich an der äußeren Umfangsfläche des Aufnahmeabschnitts und an der inneren Umfangsfläche des Befestigungsmittels eingeleitet werden kann. Dies äußert sich dann in dem genannten vorteilhaften Volumenverhältnis.

Bevorzugt erstreckt sich das erste Eingriffsmittel über die gesamte äußere Umfangsfläche, welche bis zu einer Endkante des Aufnahmeabschnitts verläuft. Die verfügbare Fläche des Aufnahmeabschnitts wird dabei vollständig ausgenutzt, so dass auch bei nicht hochfestem metallischen Material eine sehr hohe Klemmkraft auf das Dichtmittel ausgeübt werden kann. Die erreichbare Dauerfestigkeit ist zudem ebenfalls sehr vorteilhaft, da die Materialspannung aufgrund der großen Fläche vergleichsweise gering ist.

Korrespondierend dazu kann das zweite Eingriffsmittel eine axiale Erstreckung aufweisen, die mindestens dem 0,9-fachen der axialen Erstreckung des ersten Eingriffsmittels entspricht. Demgemäß kann über mindestens 90% der Fläche des ersten Eingriffsmittels eine Krafteinleitung erfolgen, was zu einer geringeren Materialspannung führt.

Bevorzugt ist das Dichtmittel an dem ersten Endbereich mit einem sich verjüngenden Außendurchmesser ausgestattet, wobei die Verjüngung in einer Endkante mündet und wobei die Verjüngung korrespondierend zu der sich konisch verjüngenden Öffnung des Aufnahmeabschnitts ausgebildet ist. Der Innendurchmesser des Dichtmittels ist folglich in dem ersten Endbereich konstant. Durch die Verjüngung wird eine Art Schneid- oder Klemmkante gebildet, welche in Kombination mit der sich konisch verjüngenden Öffnung zu einer Aufwerfung von Material an der Hydraulikleitung führt. Aufgrund der aneinander angepassten Form kann eine besonders wirksame radiale Klemmkraft der Endkante des Dichtmittels durch Einwirkung einer axialen Druckkraft auf die der Endkante entgegengesetzt angeordnete erste axiale Kontaktfläche erreicht werden.

Besonders bevorzugt ist die erste axiale Kontaktfläche eine konisch geformte Ringfläche. Folglich ist auch die zweite axiale Kontaktfläche, die sich innerhalb des Befestigungselements befindet, eine konische Ringfläche oder ein konischer, ringförmiger Abschnitt einer Innenfläche des Befestigungselements. Die Konizität kann derart ausgebildet sein, dass sich die erste bzw. zweite axiale Kontaktfläche zu der Endkante hin aufweitet. Die konische Ausgestaltung kann zum Einen die Größe der in einen Flächenkontakt einbezogenen Fläche erhöhen und zum Anderen eine Zentrierung des Dichtmittels an dem Befestigungselement durchführen. Dadurch können ein Verkanten des Dichtmittels und eine Beeinträchtigung der Hydraulikleitung verhindert werden.

Die Erfindung betrifft ferner ein Fahrzeug mit einem vorangehend beschriebenen Hydraulikkomponentensystem. Das Fahrzeug könnte ein Luftfahrzeug sein. Durch die Verwendung des Hydraulikkomponentensystems wird insbesondere an den Verbindungsstellen zwischen einer Hydraulikleitung und einer Hydraulikkomponente Gewicht und Bauraum eingespart.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt eine Schnittansicht eines Details eines Hydraulikkomponentensystems mit einer Hydraulikkomponente, einem Schneidring, einem Befestigungselement und einer Hydraulikleitung.
Fig. 2 zeigt eine dreidimensionale Darstellung einer Hydraulikkomponente.
Fig. 3 zeigt ein Flugzeug, in das ein erfindungsgemäßes Hydraulikkomponentensystem installiert ist.

### DETAILLIERTE DARSTELLUNG EXEMPLARISCHER AUSFÜHRUNGSFORMEN

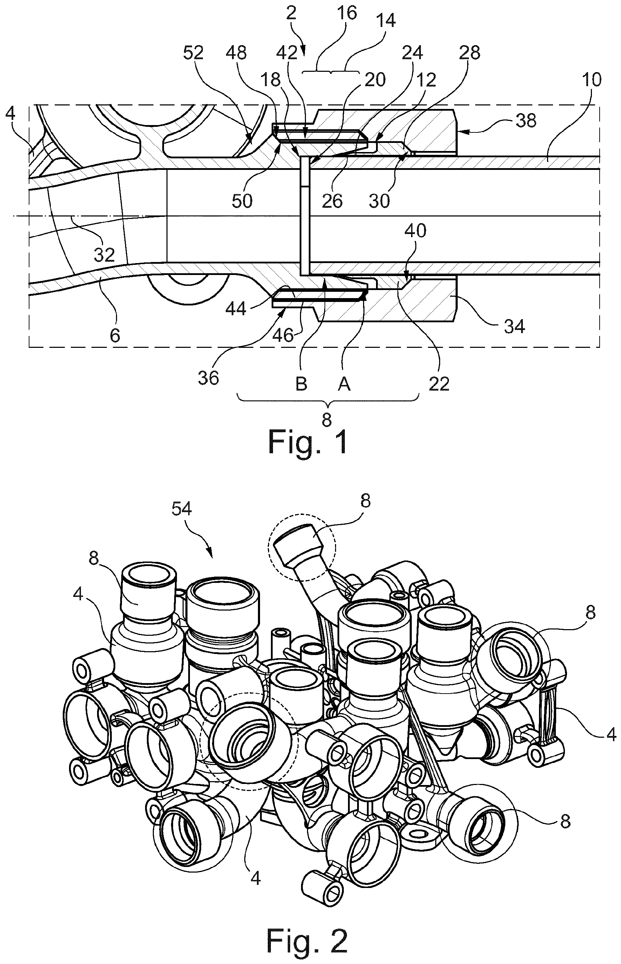

Fig. 1 zeigt ein Detail eines Hydraulikkomponentensystems 2 in einer Schnittdarstellung. Es wird exemplarisch eine Hydraulikkomponente 4 dargestellt, welche zumindest teilweise durch ein generatives Schichtbauverfahren hergestellt ist. Insbesondere der in Fig. 1 sichtbare Bereich ist durch ein solcher Verfahren hergestellt, so dass sämtliche dargestellten Komponenten ein einzelnes, integrales Bauteil bilden. Im Vordergrund ist ein Leitungsende 6 gezeigt, welches als ein Rohrabschnitt ausgeführt ist und einen Aufnahmeabschnitt 8 aufweist.

Der Aufnahmeabschnitt 8 ist dazu ausgebildet, eine Hydraulikleitung 10 aufzunehmen und mit dieser eine hochdruckfeste Verbindung einzugehen. Hierzu weist der Aufnahmeabschnitt 8 eine Öffnung 12 auf, die in einem Endbereich 14 konisch ausgeführt ist, so dass sich der Querschnitt der Öffnung 12 von einem ersten Querschnitt A in das Leitungsende 6 hinein bis zu einem zweiten Querschnitt B verjüngt. Direkt im Anschluss hieran befindet sich ein zylindrischer Abschnitt 16, dessen Innendurchmesser an einen Außendurchmesser der Hydraulikleitung 10 angepasst ist. Ein von dem konischen Bereich 14 abgewandtes Ende des zylindrischen Bereichs 16 weist eine ringförmige Begrenzungsfläche 18 auf, die mit einer ringförmigen Stirnfläche 20 der Hydraulikleitung 10 korrespondierend ausgestaltet ist. Die Hydraulikleitung 10 kann daher durch den konischen Bereich 14 in den Aufnahmeabschnitt 8 eingeführt werden, wobei die Einstecktiefe durch die ringförmige Begrenzungsfläche 18 begrenzt wird.

Ein Dichtmittel in Form eines Schneidrings 22 ist auf der Hydraulikleitung 10 angeordnet und weist einen hülsenförmig geformten ersten Endbereich 24 auf. Dieser besitzt eine Endkante 26 und einen davon abgewandten zweiten Endbereich 28. Der Außendurchmesser des ersten Endbereichs 24 steigt in Richtung des zweiten Endbereichs 28 über eine relativ kurze Strecke leicht an, bis er konstant bleibt. Folglich ist die Endkante 26 eine Art Schneidkante. Die Flächensteigung über dem konischen ersten Endbereich 24 entspricht der Flächensteigung des konisch geformten Bereichs der Öffnung 12. Hierdurch kann der Schneidring 22 eine gleichmäßige und Flächenpressung in radialer Richtung, also eine in Richtung einer Mittelachse 32 wirkende Kraft, hervorrufen, wenn er in Richtung der Öffnung 12 bewegt wird.

Der zweite Endbereich 28 besitzt eine erste axiale Kontaktfläche 30. Diese ist beispielhaft ebenfalls konisch ausgestaltet. Der Außendurchmesser der ersten axialen Kontaktfläche 30 steigt in Richtung der Endkante 26 über eine relativ kurze Strecke an und bleibt anschließend über einen gewissen Bereich konstant.

Ein Befestigungselement 34 besitzt einen Eingriffsbereich 36, der in der gezeigten Darstellung den Aufnahmeabschnitt 8 umgibt. Gegenüberliegend ist ein Klemmbereich 38 angeordnet, der auf einer zu dem Eingriffsbereich 36 gewandten Innenseite eine zweite axiale Kontaktfläche 40 aufweist, die korrespondieren zu der ersten axialen Kontaktfläche 30 ausgebildet ist. Beide axiale Kontaktflächen 30 und 40 stehen in einem Flächenkontakt zueinander und das Befestigungselement 34 umgibt den Schneidring 22 vollständig.

Der Aufnahmeabschnitt 8 weist an einer äußeren Umfangsfläche 42 erste Eingriffsmittel 44 auf, die mit zweiten Eingriffsmitteln 46 an einer Innenseite des Eingriffsbereichs 36 angeordnet sind. Diese können beispielsweise als Gewinde ausgeführt sein. Das Befestigungselement 34 kann durch Eingreifen der Eingriffsmittel 44 und 46 fest mit dem Aufnahmeabschnitt 8 verbunden werden, so dass hieraus resultierend der Schneidring 22 in die Öffnung 12 gepresst wird. Folglich ergibt sich eine Aufwerfung von Material an der Hydraulikleitung 10, die eine hochdruckfeste Abdichtung hervorruft.

Der Aufnahmeabschnitt weist eine erste, ringförmige Anschlagfläche 48 auf, mit der eine korrespondierend geformte, zweite ringförmige Anschlagfläche 50 des Befestigungselements 34 in Flächenkontakt gerät. Die erste ringförmige Anschlagfläche 48 ist in einem Übergangsbereich 52 des Aufnahmeabschnitts 8 angeordnet, der eine kontinuierliche Verjüngung bzw. Aufweitung des Außendurchmessers des Leitungsendes 6 durchführt. Hierdurch kann eine lokal in axialer Richtung wirkende Kraft sehr gut in das Leitungsende 6 eingeführt werden, ohne Kerbwirkungen hervorzurufen.

In Fig. 2 wird eine Hydraulikbaugruppe 54 mit einer Reihe von Hydraulickomponenten 4 dargestellt, die allesamt mit einem vorangehend erläuterten Aufnahmeabschnitt 8 ausgestattet sind, um eine vorteilhafte, gewichts- und raumsparende Verbindung zu Hydraulikleitungen durchzuführen.

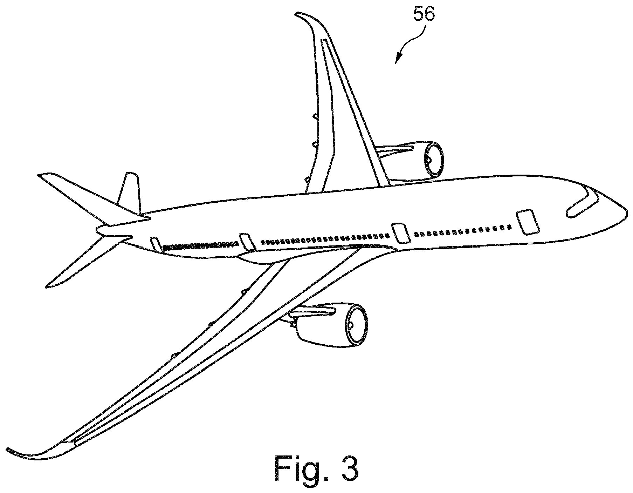

Fig. 3 zeigt ein Luftfahrzeug 56, das mindestens ein derartiges Hydraulikkomponentensystem 2 aufweist. Gerade in einem Luftfahrzeug eignet sich die Verwendung eines erfindungsgemäßen Hydraulikkomponentensystems zum Einsparen von Gewicht und zur Reduktion von Herstellkosten.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Hydraulikkomponentensystem (2), aufweisend:
- mindestens eine Hydraulikleitung (10),
- eine Hydraulikkomponente (4), die zumindest teilweise mithilfe eines generativen Herstellverfahrens hergestellt ist und ein Leitungsende (6) mit einem integralen, ringförmigen Aufnahmeabschnitt (8) mit einer erste Eingriffsmittel (44) aufweisenden äußeren Umfangsfläche (42) und einer zumindest bereichsweise konisch zulaufenden Öffnung (12) zum Einführen der Hydraulikleitung (10) aufweist,
- ein an der Hydraulikleitung (10) positionierbares ringförmiges Dichtmittel (22) und
- ein an der Hydraulikleitung (10) positionierbares und mit dem Aufnahmeabschnitt (8) verbindbares hohles Befestigungselement (34),
wobei das Dichtmittel (22) einen ersten Endbereich (24) und einen gegenüberliegenden zweiten Endbereich (28) mit einer ersten axialen Kontaktfläche (30) aufweist,
wobei das Befestigungselement (34) einen Eingriffsbereich (36) mit einer innenseitigen Umfangsfläche mit zweiten Eingriffsmitteln (46) und einen gegenüberliegenden Klemmbereich (38) mit einer zum Eingriffsbereich (36) weisenden zweiten axialen Kontaktfläche (40) aufweist und dazu ausgebildet ist, die Hydraulikleitung (10) und das darauf befindliche Dichtmittel (22) zu umschließen und einen Flächenkontakt zwischen der ersten und der zweiten axialen Kontaktfläche (30, 40) hervorzurufen,
wobei der Aufnahmeabschnitt (8), das Dichtmittel (22) und das Befestigungselement (34) derart zueinander korrespondierend ausgestaltet sind, dass durch Eingreifen der ersten und zweiten Eingriffsmittel (44, 46) ineinander der erste Endbereich (24) des Dichtmittels (22) in den konisch zulaufenden Bereich der Öffnung (12) des Aufnahmeabschnitts (8) und die Hydraulikleitung (10) gepresst wird und dadurch eine Abdichtung zwischen dem Aufnahmeabschnitt (8), dem Dichtmittel (22) und der Hydraulikleitung (10) zueinander erfolgt.

2. Hydraulikkomponentensystem (2) nach Anspruch 1,
wobei der erste Endbereich (24) des Dichtmittels (22) hülsenförmig ist.

3. Hydraulikkomponentensystem (2) nach einem der vorhergehenden Ansprüche,
wobei das Dichtmittel (22) ein Schneidring ist.

4. Hydraulikkomponentensystem (2) nach einem der vorhergehenden Ansprüche,
wobei ein innerhalb des Aufnahmeabschnitts (8) gebildeter erster Strömungsquerschnitt einem innerhalb der Hydraulikleitung (10) gebildeten zweiten Strömungsquerschnitt entspricht.

5. Hydraulikkomponentensystem (2) nach einem der vorhergehenden Ansprüche,
wobei der Aufnahmeabschnitt (8) einen von der Öffnung (12) abgewandten Übergangsbereich (52) aufweist, in dem ein Außendurchmesser des Leitungsendes (6) entlang des Leitungsendes (6) in einer von der Öffnung (12) abgewandten Richtung kontinuierlich von einem maximalen Außendurchmesser zu einem konstanten Leitungsaußendurchmesser sinkt und
wobei an einer zu der Öffnung (12) gewandten Seite des Übergangsbereichs (52) eine ringförmige erste Anschlagfläche (48) gebildet ist, mit der eine korrespondierend geformte ringförmige zweite Anschlagfläche (50) des Befestigungselements (34) in Flächenkontakt bringbar ist.

6. Hydraulikkomponentensystem (2) nach Anspruch 5,
wobei die ringförmige erste Anschlagfläche (48) konisch ausgebildet ist und sich ein Außendurchmesser von der äußeren Umfangsfläche (42) zu dem Übergangsbereich (52) hin aufweitet.

7. Hydraulikkomponentensystem (2) nach einem der vorhergehenden Ansprüche,
wobei die Öffnung (12) einen konisch zulaufenden Einführbereich (14) und einen sich daran anschließenden hohlzylindrischen Bereich (16) aufweist, der eine ringförmige Begrenzungsfläche (18) aufweist, die mit einer ringförmigen Stirnfläche (20) der Hydraulikleitung (10) korrespondiert.

8. Hydraulikkomponentensystem (2) nach einem der vorhergehenden Ansprüche,
wobei der Durchmesser der äußeren Umfangsfläche (42) des Aufnahmeabschnitts (8) derart gewählt ist, dass das durch die äußere Umfangsfläche (42) gebildete Volumen höchstens das 2,5fache des von der äußeren Umfangsfläche (42) umschlossenen Hohlraums ist.

9. Hydraulikkomponentensystem (2) nach einem der vorhergehenden Ansprüche,
wobei sich das erste Eingriffsmittel (44) über die gesamte äußere Umfangsfläche (42) erstreckt, welche bis zu einer Endkante des Aufnahmeabschnitts (8) verläuft.

10. Hydraulikkomponentensystem (2) nach Anspruch 9,
wobei das zweite Eingriffsmittel (46) eine axiale Erstreckung aufweist, die mindestens dem 0,9-fachen der axialen Erstreckung des ersten Eingriffsmittels (44) entspricht.

11. Hydraulikkomponentensystem (2) nach einem der vorhergehenden Ansprüche,
wobei das Dichtmittel (22) an dem ersten Endbereich (24) mit einem sich verjüngenden Außendurchmesser ausgestattet ist, wobei die Verjüngung in einer Endkante (26) mündet,
wobei die Verjüngung korrespondierend zu der sich konisch verjüngenden Öffnung (12) des Aufnahmeabschnitts (8) ausgebildet ist.

12. Hydraulikkomponentensystem (2) nach Anspruch 11,
wobei die sich konisch verjüngende Öffnung (12) und der erste Endbereich (24) des Dichtmittels (22) miteinander korrespondierende Flächensteigungen aufweisen, die einem Flächenwinkel aus einem Bereich von 20 bis 30° und bevorzugt 24° gegenüber einer Längsachse des Aufnahmeabschnitts (8) entsprechen.

13. Hydraulikkomponentensystem (2) nach einem der vorhergehenden Ansprüche,
wobei die erste axiale Kontaktfläche (30) eine konisch geformte Ringfläche ist.

14. Fahrzeug (56), aufweisend mindestens ein Hydraulikkomponentensystem (2) nach einem der Ansprüche 1 bis 13.

15. Fahrzeug (56) nach Anspruch 14, wobei das Fahrzeug (56) ein Luftfahrzeug (56) ist.
